# FASCICULE DE BREVET EUROPEEN

(11) **EP 3 640 086 B1**
(45) Date de publication et mention de la délivrance du brevet: **10.03.2021**
(21) Numéro de dépôt: 19202673.0
(22) Date de dépôt: 11.10.2019
(51) Int. Cl.: B60N 3/00

(54) **TABLE POUR VÉHICULE**
TISCH FÜR FAHRZEUG
TABLE FOR VEHICLE

(30) Priorité: 15.10.2018 FR 1859514
(43) Date de publication de la demande: 22.04.2020
(73) Titulaire: ALSTOM Transport Technologies, 93400 Saint-Ouen (FR)
(72) Inventeur: LE-CORRE, Dominique, 67350 Pfaffenhoffen (FR)
(74) Mandataire: Lavoix

(56) Documents cités:
- WO-A1-2016/146325
- DE-A1-102011 118 755
- FR-A1- 2 898 090
- GB-A- 2 433 435
- US-A1- 2017 355 465

## Description

La présente invention concerne une table pour véhicule, du type comprenant :
- un premier élément de table, destiné à être solidarisé au véhicule,
- au moins un deuxième élément de table, monté mobile sur le premier élément de table entre une position déployée et une position rentrée.

On connaît des tables pour véhicule du type précité. De telles tables sont notamment utilisées dans des trains. L'utilisation d'éléments mobiles est destiné à fournir une flexibilité d'utilisation, en particulier à permettre aux passagers de disposer d'une surface de travail variable, selon leurs besoins, ainsi que de faciliter l'accès aux places assises.

US 2014/0338572 A1 décrit une telle table, comprenant un élément mobile, propre à glisser sous un plateau de table, ou être extraites de cette position pour augmenter la surface de travail fournie par la table.

Une telle table ne donne pas entière satisfaction. Lors d'un arrêt ou d'une accélération soudain(e), un passager pourrait entrer en contact avec une extrémité de la table. Cette extrémité peut exercer une pression importante sur le passager, ce qui peut entraîner une blessure grave. La possibilité d'une telle collision est plus élevée lorsque la partie mobile est en déploiement.

WO 2016/146325 A1 divulgue une table comprenant un premier élément de table et un deuxième élément de table monté coulissant par rapport au premier élément de table.

FR 2 898 090 A1 divulgue une table conforme au préambule de la revendication 1.

Un but de l'invention est de mieux protéger des passagers lors d'arrêts ou d'accélérations soudaines d'un train muni de tables avec parties mobiles. Un autre but est de créer des espaces additionnels afin de faciliter l'accès aux places assises des passagers à mobilité réduite.

A cet effet, l'invention a pour objet une table selon la revendication 1.

Dans des modes de réalisation particuliers de l'invention, la table présente en outre l'une ou plusieurs des caractéristiques suivantes, prise(s) isolément ou suivant toute(s) combinaison(s) techniquement possible(s) :
- le troisième élément est en contact direct avec le premier élément lors de sa rotation de sa position de repos jusqu'à sa position de déploiement.
- le premier élément comprend au moins une glissière configurée pour recevoir le deuxième élément, la glissière autorisant un mouvement de translation du deuxième élément par rapport au premier élément entre la position déployée et la position rentrée à l'exclusion de tout autre mouvement.
- l'angle entre la position de repos et la position de déploiement du troisième élément est compris entre 80° et 95°.
- le deuxième élément de table est monté mobile en translation rectiligne selon une direction parallèle à une direction d'allongement du premier élément de table.
- le deuxième élément s'étend, selon la direction d'allongement, entre une extrémité proximale et une extrémité distale, l'extrémité distale étant à l'écart du premier élément dans la position déployée du deuxième élément, et étant en contact avec le premier élément dans la position rentrée du deuxième élément, le troisième élément de table étant monté mobile en rotation sur ladite extrémité distale.
- le troisième élément comprend une surface supérieure et une surface inférieure, la surface supérieure affleurant une surface supérieure du premier élément lorsque le troisième élément est dans sa position de repos, la surface inférieure étant disposée en regard d'une surface du deuxième élément lorsque le troisième élément est dans sa position de repos, la surface inférieure ayant un profil courbe convexe, la surface inférieure du troisième élément étant configurée pour venir au contact du premier élément lors de la rotation du troisième élément de sa position de repos à sa position de déploiement.
- le troisième élément est articulé par rapport au deuxième élément par une charnière, la charnière étant configurée pour exercer un couple résistant entre le deuxième élément et le troisième élément.
- le premier élément présente une saillie en regard du troisième élément, et le troisième élément présente une rainure, ladite saillie étant propre à se loger dans ladite rainure lorsque le troisième élément est dans la position de déploiement et le deuxième élément est dans la position rentrée.
- la surface supérieure du troisième élément présente une barrette fixe.

D'autres caractéristiques et avantages de l'invention apparaîtront à la lecture de la description qui va suivre, donnée uniquement à titre d'exemple et faite en se référant aux dessins annexés, dans lesquels :
- la figure 1 est une vue en perspective d'une table en utilisation selon l'invention, le troisième élément étant dans une position de repos, et le deuxième élément étant dans la position déployée.
- la figure 2 est une vue en perspective d'une table selon l'invention, le troisième élément étant dans une position de déploiement, et le deuxième élément étant dans la position rentrée.

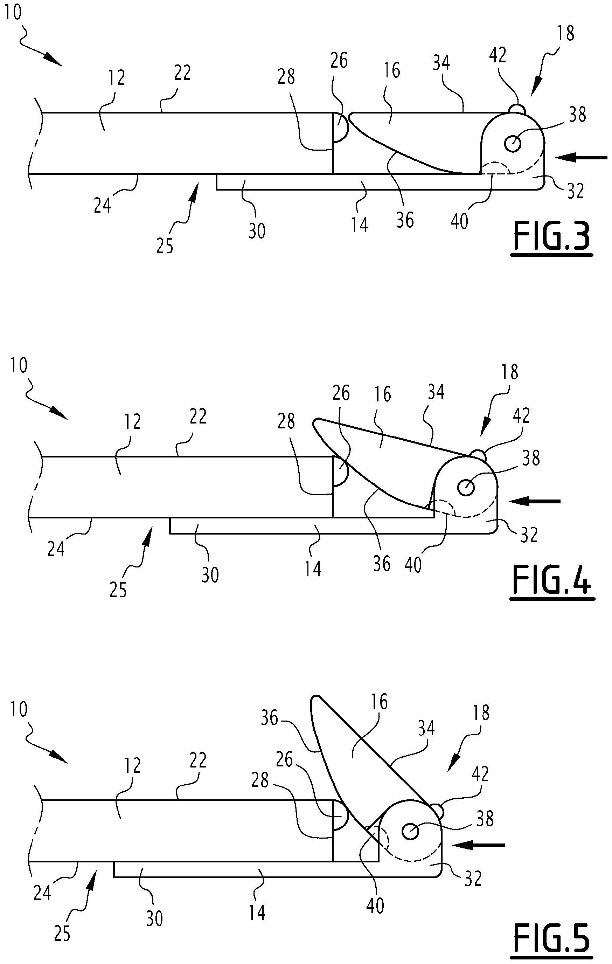

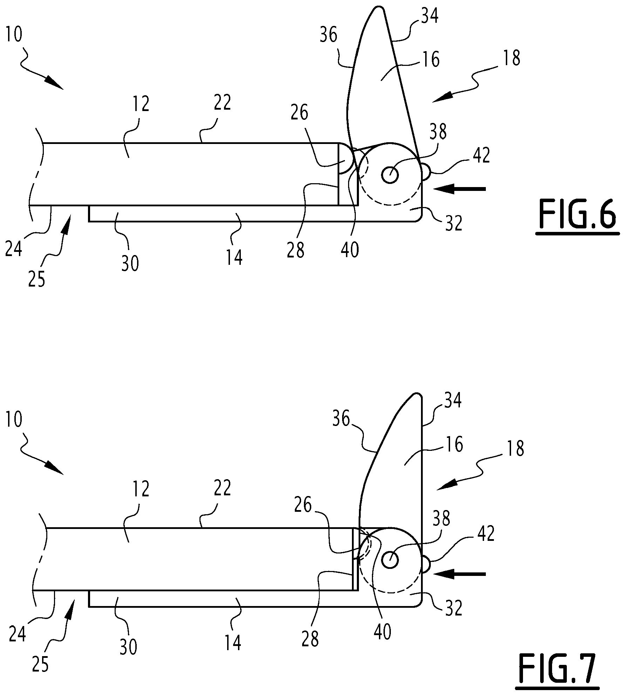

- les figures 3 à 6 sont les vues consécutives lors de la rotation de l'élément rotatif de sa position de repos à sa position de déploiement, la figure 3 montrant l'élément rotatif dans sa position de repos, la figure 6 montrant l'élément rotatif dans sa position de déploiement.
- la figure 7 est une vue d'une variante de la table de la figure 4, le troisième élément comportant en outre une barrette.

Dans ce qui suit, on désignera par « longitudinal(e) » une direction ou un plan destiné à s'étendre, en utilisation, orthogonalement à la paroi latérale du véhicule ferroviaire, et par « transversal(e) » une direction destinée à s'étendre, en utilisation, parallèlement à la paroi latérale du véhicule ferroviaire et dans un plan horizontal.

La table 10 comprend un premier élément 12, au moins un deuxième élément 14, au moins un troisième élément 16, et des moyens de couplage 18.

Le premier élément 12 est destiné à être solidarisé au véhicule. Il est fixé à une fenêtre (non-représentée sur les figures) du véhicule. Dans une variante, il est fixé à un plancher (non-représenté sur les figures) du véhicule. Dans une autre variante, il est fixé à une fenêtre et à un plancher du véhicule au même temps.

Le premier élément 12 est par exemple un plateau de la table 10.

Le premier élément 12 comporte une surface supérieure 22 et une surface inférieure 24.

Le premier élément 12 comprend en outre au moins une glissière 25.

Les surfaces supérieure et inférieure 22, 24 sont sensiblement horizontales.

La glissière 25 est configurée pour recevoir le deuxième élément 14. La glissière 25 autorise un mouvement de translation selon une direction transversale du deuxième élément 14 par rapport au premier élément 12 entre une position déployée du deuxième élément 14 et une position rentrée du deuxième élément 14 à l'exclusion de tout autre mouvement.

La glissière 25 est configurée pour autoriser un coulissement libre du deuxième élément 14.

Avantageusement, le premier élément 12 présente également une saillie 26 faisant saillie horizontalement à partir d'un bord 28 du premier élément 12. La saillie 26 est en regard du troisième élément 16.

La saillie 26 est propre à coopérer avec le troisième élément 16, comme décrit ci-après.

La saillie 26 présente par exemple une forme demi-cylindrique. En variante, la saillie 26 présente au moins deux facettes.

Le deuxième élément 14 s'étend, selon la direction d'allongement du premier élément 12, entre une extrémité proximale 30 et une extrémité distale 32. Dans la position déployée du deuxième élément 14, l'extrémité distale 32 est à l'écart du premier élément 12. Dans la position rentrée du deuxième élément 14, l'extrémité distale 32 est en contact avec le premier élément 12.

Le deuxième élément 14 est monté mobile en translation sur le premier élément 12 entre une position déployée et une position rentrée. Avantageusement, le deuxième élément 14 est monté mobile en translation rectiligne selon une direction parallèle à une direction d'allongement du premier élément 12.

En utilisation, le deuxième élément 14 est disposé en regard de l'abdomen d'un passager assis. Plus particulièrement, l'extrémité distale 32 du deuxième élément 14 est disposée en regard de l'abdomen d'un passager assis.

Le troisième élément 16 est monté mobile en rotation sur le deuxième élément 14 entre une position de repos et une position de déploiement. Avantageusement, le troisième élément 16 est monté mobile en rotation autour d'un axe longitudinal sur l'extrémité distale 32 du deuxième élément 14.

L'angle entre la position de repos et la position de déploiement du troisième élément 16, par rapport au deuxième élément 14 est compris entre est compris entre 80° et 95°, et est de préférence sensiblement égal à 90°.

Le troisième élément 16 est en contact direct avec le premier élément 12 lors de sa rotation de sa position de repos jusqu'à sa position de déploiement.

Le troisième élément 16 comprend une surface supérieure 34 et une surface inférieure 36. La surface supérieure 34 affleure la surface supérieure 22 du premier élément 12 lorsque le troisième élément 16 est dans sa position de repos.

La surface inférieure 36 est disposée en regard d'une surface du deuxième élément 14 lorsque le troisième élément 16 est dans sa position de repos.

La surface inférieure 36 du troisième élément 16 est configurée pour venir au contact du premier élément 12 lors de la rotation du troisième élément 16 de sa position de repos à sa position de déploiement.

Avantageusement, la surface inférieure 36 a un profil courbe convexe.

La surface inférieure 36 du troisième élément 16 présente une rainure 40. La saillie 26 est propre à se loger dans la rainure 40 lorsque le troisième élément 16 est dans la position de déploiement.

En utilisation, lorsque le troisième élément 16 est dans sa position de déploiement, le troisième élément 16 s'étend sensiblement parallèlement à la partie inférieure du thorax à l'abdomen d'un passager assis.

Les moyens de couplage 18 sont configurés pour entraîner en rotation le troisième élément 16 de sa position de repos jusqu'à sa position de déploiement lorsque le deuxième élément 14 est déplacé en translation de sa position déployée jusqu'à sa position rentrée.

Ainsi, un choc d'un passager sur le deuxième élément 14, entraînant en translation le deuxième élément 14 vers sa position rentrée, est propre à entraîner en outre une rotation de troisième élément 16 vers sa position de déploiement.

Les moyens de couplage 18 comprennent au moins une charnière 38 qui articule le troisième élément 16 par rapport au deuxième élément 14. Avantageusement, la charnière 38 est montée à l'extrémité distale 32 du deuxième élément 14.

La charnière 38 incorpore par exemple une butée interne, empêchant une rotation du troisième élément 16 par rapport au deuxième élément 14 au-delà de sa position de déploiement.

Avantageusement, la charnière 38 exerce un couple résistant entre le deuxième élément 14 et le troisième élément 16.

Le couple est configuré de manière à pouvoir maintenir le troisième élément 16 en plusieurs positions intermédiaires strictement comprises entre la position de repos et la position de déploiement, et à pouvoir facilement être manipulé par une personne qui désire faire pivoter le troisième élément 16 par rapport au deuxième élément 14, indépendamment de la position du deuxième élément 14 par rapport au premier élément 12.

Dans une configuration préférée, la surface supérieure 34 du troisième élément 16 présente au moins une barrette 42 fixe. La barrette 42 est configurée pour maintenir une tablette ou un téléphone portable sur la surface supérieure 34 lorsque le troisième élément 14 se trouve dans une position inclinée, par exemple à 45°.

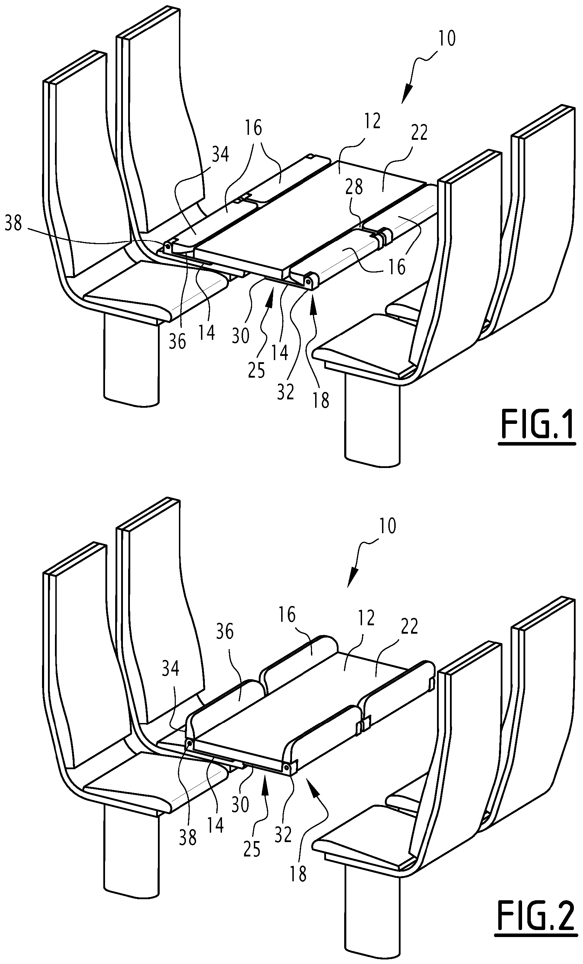

Dans une configuration préférée, quatre ensembles de deuxième et troisième éléments 14, 16 sont montés sur un premier élément 12 commun, comme illustré sur les Figures 1 et 2. Chaque ensemble des deuxième et troisième éléments 14, 16 se trouve face à un passager assis.

Le fonctionnement d'une table 10 selon l'invention va maintenant être décrit.

Par défaut, lors de l'utilisation de la table 10, le troisième élément 16 occupe sa position de repos. Un passager est à distance de la table 10.

Lors d'une accélération ou décélération soudaine, le passager est projeté vers la table 10 dans la direction transversale et entre en contact avec l'extrémité distale 32 du deuxième élément 14. Dans ce cas, le passager exerce une force sensiblement horizontale sur le deuxième élément 14.

Le deuxième élément 14 est entraîné en translation par rapport au premier élément 12, vers sa position rentrée, notamment jusqu'à sa position rentrée.

De ce fait, le troisième élément 16 est entrainé en rotation par rapport au deuxième élément 14, grâce au moyens de couplage 18, vers sa position déployée, notamment jusqu'à sa position déployée.

De préférence, le deuxième élément 14 n'est entraîné en translation par rapport au premier élément 12, vers sa position rentrée, que si la force exercée par le passager sur la table dépasse un seuil. Dans le mode de réalisation illustré, le deuxième élément 14 entraîne d'abord en translation le troisième élément 16, jusqu'à ce que la surface inférieure 36 du troisième élément 16 entre en contact avec la saillie 26.

Ce contact entraîne une rotation du troisième élément 16 par rapport au deuxième élément 14 lorsque la translation du deuxième élément 14 vers la position rentrée se poursuit, jusqu'à ce que la saillie 26 du premier élément 12 se loge dans la rainure 40. La résistance exercée par le premier élément 12 sur le troisième élément 16 interrompt le déplacement du deuxième élément 14 et du troisième élément 16.

A la suite d'un tel incident, la table 10 peut être ramenée à sa configuration initiale en exerçant une force horizontale sur le deuxième élément 14 vers la position déployée du deuxième élément 14, et en exerçant un couple sur le troisième élément 16 vers la position repos du troisième élément 16.

Grâce à l'invention décrite ci-dessus, la sécurité de passagers est mieux assurée, notamment lors des accidents. La surface d'impact de passagers est augmentée, ce qui diminue la pression exercée par les tables sur les passagers en cas de chocs, et diminue les risques de blessures des passagers.

La table selon l'invention permet en outre le maintien de livres ou de petits appareils électroniques selon une inclinaison choisie du troisième élément 16, et facilite ainsi les activités des passagers de manière plus ergonomique.

Lorsque le troisième élément 16 est dans sa position de déploiement, des espaces additionnels sont ainsi créés pour faciliter l'accès aux places assises des passagers à mobilité réduite.

## Revendications

1. Table (10) pour un véhicule, comprenant :
- un premier élément (12) de table, destiné à être solidarisé au véhicule,
- au moins un deuxième élément (14) de table, monté mobile sur le premier élément (12) de table entre une position déployée et une position rentrée, le deuxième élément (14) étant monté mobile en translation sur le premier élément (12) entre la position déployée et la position rentrée,
- au moins un troisième élément (16) de table monté mobile en rotation sur le deuxième élément (14) de table entre une position de repos, et une position de déploiement,
la table (10) étant **caractérisée en ce qu'**elle comprend en outre des moyens de couplage (18) de déplacements des deuxième et troisième éléments (14, 16) de table, configurés pour entraîner en rotation le troisième élément (16) de table de sa position de repos jusqu'à sa position de déploiement lorsque le deuxième élément (14) est déplacé en translation de sa position déployée jusqu'à sa position rentrée.

2. Table (10) selon la revendication 1, **caractérisée en ce que** le troisième élément (16) est en contact direct avec le premier élément (12) lors de sa rotation de sa position de repos jusqu'à sa position de déploiement.

3. Table (10) selon l'une quelconque des revendications 1 ou 2, **caractérisée en ce que** le premier élément (12) comprend au moins une glissière (25) configurée pour recevoir le deuxième élément (14), la glissière (25) autorisant un mouvement de translation du deuxième élément (14) par rapport au premier élément (12) entre la position déployée et la position rentrée à l'exclusion de tout autre mouvement.

4. Table (10) selon l'une quelconque des revendications 1 à 3, **caractérisée en ce que** l'angle entre la position de repos et la position de déploiement du troisième élément (16) est compris entre 80° et 95°.

5. Table (10) selon l'une quelconque des revendications 1 à 4, **caractérisée en ce que** le deuxième élément (14) de table est monté mobile en translation rectiligne selon une direction parallèle à une direction d'allongement du premier élément (12) de table.

6. Table (10) selon la revendication 5, **caractérisée en ce que** le deuxième élément (14) s'étend, selon la direction d'allongement, entre une extrémité proximale (30) et une extrémité distale (32), l'extrémité distale (32) étant à l'écart du premier élément (12) dans la position déployée du deuxième élément (14), et étant en contact avec le premier élément (12) dans la position rentrée du deuxième élément (14), le troisième élément (16) de table étant monté mobile en rotation sur ladite extrémité distale (32).

7. Table (10) selon l'une quelconque des revendications 1 à 6, **caractérisée en ce que** le troisième élément (16) comprend une surface supérieure (34) et une surface inférieure (36),
la surface supérieure (34) affleurant une surface supérieure (22) du premier élément (12) lorsque le troisième élément (16) est dans sa position de repos,
la surface inférieure (36) étant disposée en regard d'une surface du deuxième élément (14) lorsque le troisième élément (16) est dans sa position de repos, la surface inférieure (36) ayant un profil courbe convexe,
la surface inférieure (36) du troisième élément (16) étant configurée pour venir au contact du premier élément (12) lors de la rotation du troisième élément (16) de sa position de repos à sa position de déploiement.

8. Table (10) selon l'une quelconque des revendications 1 à 7, **caractérisée en ce que** le troisième élément (16) est articulé par rapport au deuxième élément (14) par une charnière (38), la charnière (38) étant configurée pour exercer un couple résistant entre le deuxième élément (14) et le troisième élément (16).

9. Table (10) selon l'une quelconque des revendications 1 à 8, **caractérisée en ce que** le premier élément (12) présente une saillie (26) en regard du troisième élément (16), et le troisième élément (16) présente une rainure (40), ladite saillie (26) étant propre à se loger dans ladite rainure (40) lorsque le troisième élément (16) est dans la position de déploiement et le deuxième élément (14) est dans la position rentrée.

10. Table (10) selon la revendication 7, **caractérisée en ce que** la surface supérieure (34) du troisième élément (16) présente une barrette (42) fixe.

## Patentansprüche

1. Tisch (10) für ein Fahrzeug, welcher aufweist:
- ein erstes Tischelement (12), welches dazu bestimmt ist, mit dem Fahrzeug verbunden zu sein,
- zumindest ein zweites Tischelement (14), welches am ersten Tischelement (12) bewegbar zwischen einer Ausgefahren-Position und einer Eingefahren-Position montiert ist, wobei das zweite Element (14) translationsbewegbar zwischen der Ausgefahren-Position und der Eingefahren-Position am ersten Element (12) montiert ist,
- zumindest ein drittes Tischelement (16), welches drehbewegbar zwischen einer Ruhe-Position und einer Entfalten-Position am zweiten Tischelement (14) montiert ist,
wobei der Tisch (10) **dadurch gekennzeichnet ist, dass** er ferner Mittel zum Koppeln (18) der Bewegungen des zweiten und des dritten Tischelements (14, 16) aufweist, welche eingerichtet sind, um das dritte Tischelement (16) von seiner Ruhe-Position bis in seine Entfalten-Position drehanzutreiben, wenn das zweite Element (14) von seiner Ausgefahren-Position bis in seine Eingefahren-Position translationsbewegt wird.

2. Tisch (10) gemäß Anspruch 1, **dadurch gekennzeichnet, dass** das dritte Element (16) in direktem Kontakt mit dem ersten Element (12) ist, während seiner Drehung von seiner Ruhe-Position bis in seine Entfalten-Position.

3. Tisch (10) gemäß irgendeinem der Ansprüche 1 oder 2, **dadurch gekennzeichnet, dass** das erste Element (12) zumindest eine Führungsschiene (25) aufweist, welche eingerichtet ist, um das zweite Element (14) aufzunehmen, wobei die Führungsschiene (25) eine Translationsbewegung des zweiten Elements (14) bezüglich des ersten Elements (12) zwischen der Ausgefahren-Position und der Eingefahren-Position unter Ausschluss jeglicher anderer Bewegung erlaubt.

4. Tisch (10) gemäß irgendeinem der Ansprüche 1 bis 3, **dadurch gekennzeichnet, dass** der Winkel zwischen der Ruhe-Position und der Entfalten-Position des dritten Elements (16) zwischen 80° und 95° liegt.

5. Tisch (10) gemäß irgendeinem der Ansprüche 1 bis 4, **dadurch gekennzeichnet, dass** das zweite Tischelement (14) in geradliniger Translation bewegbar entlang einer Richtung, welche parallel zu einer Ausdehnungsrichtung des ersten Tischelements (12) ist, montiert ist.

6. Tisch (10) gemäß Anspruch 5, **dadurch gekennzeichnet, dass** sich das zweite Element (14) entlang der Ausdehnungsrichtung zwischen einem proximalen Ende (30) und einem distalen Ende (32) erstreckt, wobei das distale Ende (32) in der Ausgefahren-Position des zweiten Elements (14) im Abstand zum ersten Element (12) ist und in der Eingefahren-Position des zweiten Elements (14) in Kontakt mit dem ersten Element (12) ist, wobei das dritte Tischelement (16) drehbewegbar am besagten distalen Ende (32) montiert ist.

7. Tisch (10) gemäß irgendeinem der Ansprüche 1 bis 6, **dadurch gekennzeichnet, dass** das dritte Element (16) eine obere Fläche (34) und eine untere Fläche (36) aufweist,
wobei die obere Fläche (34) mit einer oberen Fläche (22) des ersten Elements (12) fluchtet, wenn das dritte Element (16) in seiner Ruhe-Position ist,
wobei die untere Fläche (36) gegenüber einer Fläche des zweiten Elements (14) angeordnet ist, wenn das dritte Element (16) in seiner Ruhe-Position ist, wobei die untere Fläche (36) ein konvex gekrümmtes Profil hat,
wobei die untere Fläche (36) des dritten Elements (16) eingerichtet ist, um während der Drehung des dritten Elements (16) von seiner Ruhe-Position in seine Entfalten-Position in Kontakt mit dem ersten Element (12) zu kommen.

8. Tisch (10) gemäß irgendeinem der Ansprüche 1 bis 7, **dadurch gekennzeichnet, dass** das dritte Element (16) bezüglich des zweiten Elements (14) mittels eines Scharniers (38) gelenkverbunden ist, wobei das Scharnier (38) eingerichtet ist, um ein Widerstandsmoment zwischen dem zweiten Element (14) und dem dritten Element (16) auszuüben.

9. Tisch (10) gemäß irgendeinem der Ansprüche 1 bis 8, **dadurch gekennzeichnet, dass** das erste Element (12) einen Vorsprung (26) gegenüber des dritten Elements (16) hat und dritte Element (16) eine Nut (40) hat, wobei der besagte Vorsprung (26) imstande ist, sich in der besagten Nut (40) unterzubringen, wenn das dritte Element (16) in der Entfalten-Position ist und das zweite Element (14) in der Eingefahren-Position ist.

10. Tisch (10) gemäß Anspruch 7, **dadurch gekennzeichnet, dass** die obere Fläche (34) des dritten Elements (16) eine feste Leiste (42) hat.

## Claims

1. A table (10) for a vehicle, comprising:
- a first table element (12), suitable for being secured to the vehicle,
- at least one second table element (14), mounted movably on the first table element (12) between a deployed position and a withdrawn position, the second element (14) being mounted translatably on the first element (12) between the deployed position and the withdrawn position,
- at least one third table element (16) mounted rotatably on the second table element (14) between an idle position and a deployed position,
the table (10) being **characterized in that** it further comprises means for coupling (18) movements of the second and third table elements (14, 16), configured to rotate the third table element (16) from its idle position to its deployed position when the second element (14) is translated from its deployed position to its withdrawn position.

2. The table (10) according to claim 1, **characterized in that** the third element (16) is in direct contact with the first element (12) during its rotation from its idle position to its deployed position.

3. The table (10) according to any one of claims 1 or 2, **characterized in that** the first element (12) comprises at least one guideway (25) configured to receive the second element (14), the guideway (25) authorizing a translational movement of the second element (14) relative to the first element (12) between the deployed position and the withdrawn position to the exclusion of any other movement.

4. The table (10) according to any one of claims 1 to 3, **characterized in that** the angle between the idle position and the deployed position of the third element (16) is between 80° and 95°.

5. The table (10) according to any one of claims 1 to 4, **characterized in that** the second table element (14) is mounted movably in rectilinear translation along a direction parallel to an elongation direction of the first table element (12).

6. The table (10) according to claim 5, **characterized in that** the second element (14) extends, along the elongation direction, between a proximal end (30) and a distal end (32), the distal end (32) being separated from the first element (12) in the deployed position of the second element (14), and being in contact with the first element (12) in the withdrawn position of the second element (14), the third table element (16) being mounted rotatably on said distal end (32).

7. The table (10) according to any one of claims 1 to 6, **characterized in that** the third element (16) comprises an upper surface (34) and a lower surface (36),
the upper surface (34) being flush with an upper surface (22) of the first element (12) when the third element (16) is in its idle position,
the lower surface (36) being arranged opposite a surface of the second element (14) when the third element (16) is in its idle position, the lower surface (36) having a convex curved profile,
the lower surface (36) of the third element (16) being configured to come into contact with the first element (12) during the rotation of the third element (16) from its idle position to its deployed position.

8. The table (10) according to any one of claims 1 to 7, **characterized in that** the third element (16) is articulated relative to the second element (14) by a hinge (38), the hinge (38) being configured to exert a resisting torque between the second element (14) and the third element (16).

9. The table (10) according to any one of claims 1 to 8, **characterized in that** the first element (12) has a protrusion (26) opposite the third element (16), and the third element (16) has a groove (40), said protrusion (26) being able to be housed in said groove (40) when the third element (16) is in the deployed position and the second element (14) is in the withdrawn position.

10. The table (10) according to claim 7, **characterized in that** the upper surface (34) of the third element (16) has at least one stationary bar (42).
